(19) Europäisches Patentamt
European Patent Office
Office européen des brevets

(11) Veröffentlichungsnummer: **0 321 852 B1**

(12) **EUROPÄISCHE PATENTSCHRIFT**

(45) Veröffentlichungstag der Patentschrift: **18.12.91**

(51) Int. Cl.$^5$: **C08F 10/14**, C08F 10/04, C08F 4/64

(21) Anmeldenummer: **88120951.4**

(22) Anmeldetag: **15.12.88**

(54) **1-Olefinpolymerwachs und Verfahren zu seiner Herstellung.**

(30) Priorität: **21.12.87 DE 3743321**

(43) Veröffentlichungstag der Anmeldung:
**28.06.89 Patentblatt 89/26**

(45) Bekanntmachung des Hinweises auf die Patenterteilung:
**18.12.91 Patentblatt 91/51**

(84) Benannte Vertragsstaaten:
**BE DE ES GB IT NL**

(56) Entgegenhaltungen:
**EP-A- 0 185 918**
**US-A- 4 522 982**

**PATENT ABSTRACTS OF JAPAN, Band 11, Nr. 85 (C-410)[2532], 14. März 1987**

**DIE ANGEWANDTE MAKROMOLEKULARE CHEMIE, Band 145/146, 1986, Seiten 149-160, Hüthig & Wepf Verlag; W. KAMINSKY: "Stereoselektive Polymerisation von Olefinen mit homogenen, chiralen Ziegler-Natta-Katalysatoren"**

(73) Patentinhaber: **HOECHST AKTIENGESELLSCHAFT**
**Postfach 80 03 20**
**W-6230 Frankfurt am Main 80(DE)**

(72) Erfinder: **Winter, Andreas, Dr.**
**Gundelhardtstrasse 2**
**W-6233 Kelkheim (Taunus)(DE)**
Erfinder: **Antberg, Martin, Dr.**
**Sachsenring 10**
**W-6238 Hofheim am Taunus(DE)**
Erfinder: **Rohrmann, Jürgen, Dr.**
**Sepp-Herberger-Strasse 17**
**W-8056 Neufahrn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung bezieht sich auf ein 1-Olefinpolymerwachs hoher Isotaktizität mit enger Molmassenverteilung $M_w/M_n$ und exzellenter Kornmorphologie und ein Verfahren zu seiner Herstellung.

Die Herstellung von höherisotaktischen Polyolefinwachsen (Isotakt. Index 80 bis 85 %, Schmelzenthalpie 63 J/g, Mischungen aus ataktischen und isotaktischen Polyolefinketten) mittels Trägerkatalysator, Cokatalysator und Stereoregulator bei Temperaturen von über 95 °C ist bekannt (vgl. DE-A 31 48 229). Als Molmassenregler müssen jedoch große Mengen Wasserstoff eingesetzt werden, da derartige Katalysatorsysteme ihre größte Wirksamkeit im Bereich hochmolekularer Polyolefinkunststoffe entfalten. Zum Erreichen von für Wachse typischen Polymerisationsgraden werden Partialdruckverhältnisse Propylen : Wasserstoff von $\leqq 1$ benötigt.

Ferner ist auch ein $MgCl_2$-Trägerkontakt bekannt, der zu kristallinen PP-Wachsen mit enger Molmassenverteilung führt (vgl. JP 59/206 409). Auch dieser Katalysator weist die typischen Nachteile von Katalysatorsystemen auf, die für die Herstellung hochmolekularer Polyolefinkunststoffe entwickelt wurden und somit eine sehr schlechte Wasserstoffansprechbarkeit aufweisen. Um Wachse herzustellen, sind sehr große Mengen Wasserstoff erforderlich. Daraus resultiert eine schlechte Raumzeitausbeute sowie eine geringe Aktivität. Ferner ist auch hier im Wachsprodukt eine unerwünschte Mischung aus isotaktischen und ataktischen Ketten vorhanden.

Außerdem ist bekannt, daß bei solch hohen Wasserstoff/Propylen-Verhältnissen unter Ziegler-Polymerisationsbedingungen Hydrierung von Propylen zu Propan in nennenswertem Umfang auftritt, was zu deutlichen Propylenverlusten führt.

Bedingt durch die geringen Katalysatoraktivitäten unter den notwendigen Reaktionsbedingungen werden in den Polymerwachsen relativ hohe Chlorgehalte von teilweise über 1000 ppm gefunden, sofern die Katalysatorrückstände nicht durch eine spezielle Nachbehandlung entfernt werden.

Bekannt ist auch die Herstellung von isotaktischem PP unter Verwendung einer löslichen stereorigiden chiralen Zr-Verbindung und einem Aluminoxan (vgl. EP-A 185918). Man erhält ein Polymer mit einer engen Molmassenverteilung, was für bestimmte Anwendungsgebiete, beispielsweise für den Hochleistungsspritzguß, von Vorteil ist. Gleichzeitig besitzt das Katalysatorsystem eine Reihe von Mängeln. Wegen der geringen Aktivität ist eine aufwendige Reinigung des Polymers erforderlich, um die großen Restmengen an Katalysator zu entfernen. Die Schüttdichte des Polymers ist zu gering, die Kornmorphologie und die Korngrößenverteilung unbefriedigend.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE 37 26 067).

Ferner ist aus der Literatur bekannt, daß die Molmasse von Polyolefinen, die mit Metallocen/Aluminoxan hergestellt werden, über die Polymerisationstemperatur gesteuert werden kann. Eine hohe Polymersationstemperatur führt dabei zu einer niedrigen Molmasse. Versuche haben nun gezeigt, daß bei Metallocen/Aluminoxan-Katalysatoren der technisch zur Verfügung stehende Temperaturbereich nicht ausreicht, um den für Wachstypen wichtigen Molmassenbereich zu erfassen und zu überdecken.

Ein weiterer Nachteil für die Verwendung von Polyolefinen, die mittels Metallocen/Aluminoxan-Systemen hergestellt wurden, ist die Tatsache, daß die beim Kettenabbruch entstehenden Kettenenden immer eine ungesättigte Gruppe aufweisen.

Aus der Literatur ist bekannt, daß metallorganische Verbindungen, wie etwa $AlR_3$ oder $ZnR_2$ auch in Verbindung mit Metallocen/Aluminoxan-Systemen Kettenabbruchreaktionen auslösen können. Versuche haben jedoch gezeigt, daß die Katalysatoraktivitäten meist drastisch absinken und zudem durch die notwendige Zugabe größerer Mengen dieser Molmassenregulatoren der unerwünschte Restaschegehalt in Wachs stark ansteigt. Einzig $Al(CH_3)_3$ läßt die Kontaktaktivität ansteigen, die Wirkung als Molmassenregulator ist jedoch unbefriedigend und der notwendige Einsatz großer Mengen führt ebenfalls zu einem Anstieg des Restaschegehalts im Polymeren.

Es bestand die Aufgabe, ein Verfahren zu finden, mit dessen Hilfe in Direktsynthese unter Verwendung von Metallocen/Aluminoxan-Katalysatoren Polyolefinwachse mit gesättigten Kettenenden hergestellt werden können.

Gefunden wurde, daß die Aufgabe gelöst werden kann, wenn als Molmassenregler Wasserstoff in einem bestimmten Molverhältnis 1-Olefin/$H_2$ verwendet wird.

Die Erfindung betrifft somit ein 1-Olefinpolymerwachs mit gesättigten kettenenden, bestehend aus Einheiten, welche sich von einem 1-Olefin der Formel $RCH=CH_2$, worin R einen Alkylrest mit 1 bis 28 C-Atomen bedeutet, ableiten, mit einer Molmasse $M_w$ von 1000 bis 25000, einer Molmassenverteilung $M_w/M_n$ von 1,8 bis 4,0, einer Viskositätszahl von 2 bis 60 $cm^3/g$, einem Schmelzbereich von 120 bis 160 °C, einer

Schmelzenthalpie ΔH größer 80 J/g, einem Tropfpunktbereich von 120 bis 160 °C und einer Schmelzviskosität von 100 bis 20000 mPa•s bei 170 °C.

Für das erfindungsgemäße Verfahren können verschiedene Metallocen-Katalysatoren verwendet werden.

Zur Herstellung von hochisotaktischen 1-Olefinpolymerwachsen werden stereorigide, chirale Metallocene verwendet. Diese Metallocene sind beispielsweise solche der Formel (I)

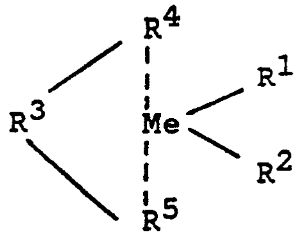

(I)

In dieser Formel ist

Me ein Metall der Gruppe IV b oder V b des Periodensystems der Elemente, also Titan, Zirkon, Hafnium, Vanadium, Niob, Tantal, vorzugsweise Titan, Zirkon und Hafnium, insbesondere Zirkon und Hafnium.

$R^1$ und $R^2$ sind gleich oder verschieden und bedeuten eine $C_1$-$C_{10}$-, vorzugsweise $C_1$-$C_3$-Alkylgruppe, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Aralkylgruppe, eine $C_8$-$C_{40}$-, vorzugsweise $C_8$-$C_{12}$-Aralkenylgruppe oder ein Halogenatom, vorzugsweise Chlor.

$R^3$ ist ein linearer $C_1$-$C_4$-, vorzugsweise $C_1$-$C_3$-Kohlenwasserstoffrest oder eine cyclischer $C_4$-$C_6$-Kohlenwasserstoffrest; diese Kohlenwasserstoffreste können mindestens ein Heteroatom als Brückeneinheit in der Kette enthalten. $R^3$ kann auch aus einem oder bis zu vier Heteroatomen bestehen, deren weitere Valenzen durch Kohlenwasserstoffreste, Wasserstoff oder Halogenatome abgesättigt sind.

Beispiele für eingliedrige Brückeneinheiten sind $-CR_2$-,-O-, -S-, -SO-, -Se-, SeO-, $-NR^6$-, $-PR^6$-, $-AsR^6$, $-BR^6$-, $-AlR^6$-, $SiR^6_2$ -, $-GeR^6_2$ -, $SnR^6_2$ , wobei $R_6$ ein Wasserstoffatom, eine $C_1$-$C_{10}$-, vorzugsweise $C_1$-$C_4$-Alkylgruppe, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Aralkylgruppe, eine $C_8$-$C_{40}$-, vorzugsweise $C_8$-$C_{12}$-Aralkenylgruppe oder ein Halogenatom, vorzugsweise Chlor oder Brom ist. Die Kohlenwasserstoffreste $R^6$ können auch Heteroatom-substituiert sein. Bevorzugt sind $-CR^6_2$ - und Silizium und Schwefel enthaltende Brückeneinheiten.

Beispiele für zweigliedrige Brückeneinheiten sind

$-(CR^6_2)_2$-, -SS-, -SeSe-, $-SiR^6_2SiR^6_2$- und $-SiR^6_2CR^6_2$-.

Beispiele für mehrgliedrige Brückeneinheiten sind

$-(CR^6_2)_3$-, $-(CR^6_2)_4$-, $-SiR^6_2OSiR^6_2$ , $-SiR^6_2(CR^6_2)_nSiR^6_2$ -, $-SiR^6_2(CR^6_2)_n$-, $-S(CR^6_2)_nS$-, $-S(CR^6_2)n$-, $-NR^6$-$(CR^6_2)_nNR^6$-, $-NR^6(R^6_2)_n$-, $-PR^6(CR^6_2)PR^6$-, $-PR^6(CR^6_2)_n$- mit n = 1 oder 2, $-AlR^6OAlR^6$-, wobei $R^6$ die vorstehend genannte Bedeutung hat. Bevorzugt sind $-(CR_2)_2$- und Silizium und Schwefel enthaltende Brückeneineiten.

$R^4$ und $R^5$ sind gleich oder verschieden, vorzugsweise gleich. Sie sind ein- oder mehrkernige Kohlenwasserstoffreste, welche zusammen mit dem Zentralatom eine Sandwichstruktur bilden können. Beispiele für derartige Reste sind die Indenyl-, Tetrahydroindenyl- oder Cyclopentadienylgruppe und Heteroaromatenliganden. Besonders bevorzugte Metallocene sind Bisindenyldimethylsilylzirkondichlorid, Ethylenbisindenylzirkondichlorid und Ethylenbisindenylhafniumdichlorid.

Die optisch aktiven Metallocene werden als Racemat eingesetzt. Verwendet werden kann aber auch die reine D- oder L-Form. Mit diesen reinen stereoisomeren Formen ist optisch aktives Wachs herstellbar. Abgetrennt werden muß jedoch die meso-Form der Metallocene, da das polymerisationsaktive Zentrum (das Metallatom) in diesen Verbindungen wegen Spiegelsymmetrie am Zentralmetall nicht mehr chiral ist. Die Trennung der Stereoisomeren ist im Prinzip bekannt.

Die vorstehend beschriebenen stereorigiden, chiralen Metallocene können nach folgendem Reaktionsschema hergestellt werden:

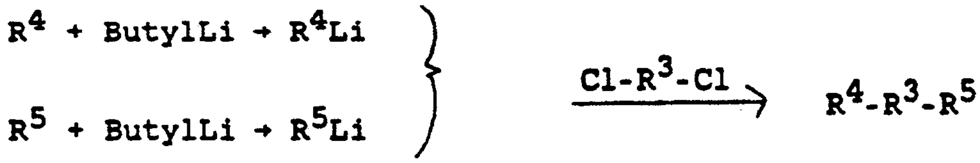


$R^4$-$R^3$-$R^5$ + 2 ButylLi → Li$R^4$-$R^3$-$R^5$Li

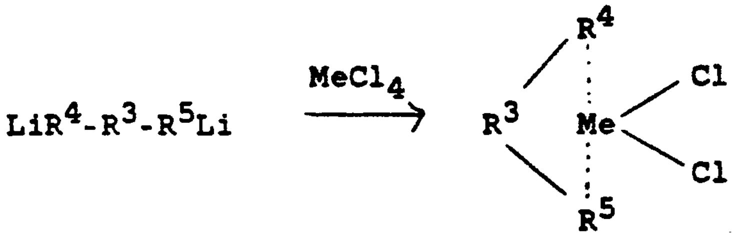


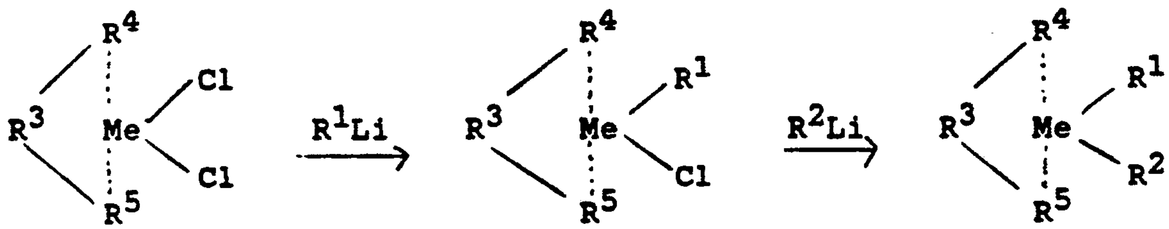


Vor dem Einsatz in der Polymerisationsreaktion wird das Metallocen mit einem Aluminoxan voraktiviert. Dieses Aluminoxan ist eine Verbindung der Formel II

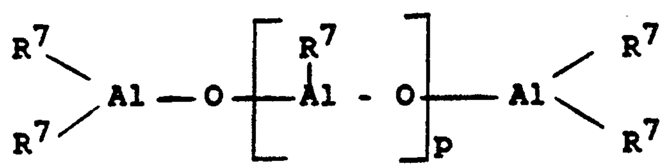
(II)

für den linearen Typ und/oder der Formel (III)

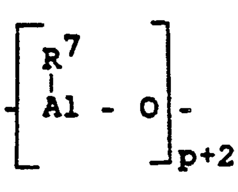
(III)

für den cyclischen Typ. In diesen Formeln bedeuten $R^7$ eine $C_1$-$C_6$-Alkylgruppe, vorzugsweise Methyl, Ethyl oder Isobutyl, insbesondere Methyl, und p eine ganze Zahl von 5 bis 40, bevorzugt 15 bis 35.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionslösung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und das Toluol unter Vakuum abdestilliert. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten

aliphatischen oder aromatischen Lösungsmittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 18 bzw. 16 mol $H_2O$/mol $Al_2(SO_4)_3$.

Die Voraktivierung wird in Lösung vorgenommen. Bevorzugt wird dabei das Metallocen in einer Lösung des Aluminoxans in einem inerten Kohlenwasserstoff aufgelöst. Als inerte Kohlenwasserstoffe eignen sich aliphatische und aromatische Kohlenwasserstoffe.

Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ bis 1 mol pro mol Aluminoxan eingesetzt. Die Voraktivierungszeit beträgt 5 Minuten bis 60 Minuten, vorzugsweise 10 bis 20 Minuten.

Eine deutlich längere Voraktivierung ist möglich, sie wirkt sich normalerweise jedoch weder aktivitätssteigernd noch aktivitätshemmend aus und hat insbesondere auf die Molmasse des erzeugten Polyolefinwachses keinen Einfluß, kann jedoch zu Lagerzwecken durchaus sinnvoll sein.

Die Voraktivierung wird bei einer Temperatur von -78 bis 100° C, vorzugsweise 0 bis 70° C durchgeführt.

Die Voraktivierung kann sowohl unter Ausschluß von Licht, als auch bei Lichteinstrahlung erfolgen, da die in der Regel lichtempfindlichen Metallocene durch das Aluminoxan stabilisiert werden. Bevorzugt ist trotzdem, besonders bei längeren Voraktivierungszeiten und bei besonders empfindlichen heteroatomsubstituierten Metallocenen direkte Lichteinstrahlung auszuschließen.

Die zweite Komponente des erfindungsgemäß zu verwendenden Katalysators ist ein Aluminoxan der Formel (II) und/oder (III). Vorzugsweise wird das gleiche Aluminoxan zur Voraktivierung und zur Polymerisation verwendet.

Der erfindungsgemäß zu verwendende Katalysator wird zur Polymerisation von 1-Olefinen der Formel $R\text{-}CH=CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen. Ferner wird der Katalysator auch zur Copolymerisation dieser Olefine untereinander und mit Ethylen eingesetzt, wobei mehr als 50 Gew.-% Ethylen einpolymerisiert werden können.

Die Polymerisation wird in bekannter Weise in flüssigem Monomeren, in Lösung, in Suspension oder in der Gasphase, kontinuierlich oder diskontinuierlich, ein- oder mehrstufig bei einer Temperatur von -50 bis 200° C, vorzugsweise -20 bis 120, insbesondere -20 bis 80° C, durchgeführt.

Das erfindungsgemäß zu verwendende Katalysatorsystem weist eine unerwartet hohe Empfindlichkeit gegenüber Wasserstoff auf.

Als Molmassenregulator wird Wasserstoff zugegeben. Der Wasserstoffpartialdruck liegt dabei zwischen 0,05 und 50 bar, vorzugsweise 0,1 bis 25 bar, insbesondere 0,2 bis 10 bar. Das Molverhältnis 1-Olefin zu Wasserstoff beträgt 3 bis 3000, vorzugsweise 6 bis 1500, insbesondere 15 bis 300.

Der Gesamtdruck im Polymerisationssystem beträgt somit 0,5 bis 120 bar. Bevorzugt ist die Polymerisation in dem technisch besonders interessanten Druckbereich von 5 bis 100 bar.

Die Metallocenverbindung wird in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $2 \cdot 10^{-2}$ mol pro $dm^3$ Lösemittel bzw. pro $dm^3$ Reaktorvolumen verwendet. Prinzipiell sind aber auch höhere Konzentrationen möglich. Es ist vorteilhaft, das Aluminoxan vor Zugabe des Metallocens in das Polymerisationssystem erste einige Minuten zusammen mit der Polymerisationsflüssigphase zu rühren. Die Rührzeit beträgt vorzugsweise 10 bis 30 Minuten. Es kann jedoch ohne größere Einbußen auch kürzere Zeit gerührt werden. Eine längere Rührzeit hat auf das Ergebnis der Polymerisation keine nennenswerte Wirkung.

Die Polymerisation wird in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt.

Die Dauer der Polymerisation ist beliebig, da das erfindungsgemäß zu verwendende Katalysatorsystem einen nur geringen zeitabhängigen Abfall der Polymerisationsaktivität zeigt. Im erfindungsgemäßen Verfahren führt die Verwendung von Wasserstoff als Molmassenregulator zu einer drastischen Erhöhung der Katalysatoraktivität. Gleichzeitig kann die Molmasse im gewünschten Bereich exakt gesteuert werden. Die gebildeten Polymeren sind von hoher chemischer Einheitlichkeit, die Molmassenverteilung $M_w/M_n$ ist dabei mit Werten zwischen 1,8 und 4,0 extrem eng. Dies führt zu scharfen Schmelzpunkten und Erstarrungspunkten. Die erfindungsgemäße Verwendung von Wasserstoff führt gleichzeitig zu einer deutlichen Erniedrigung des Restaschegehalts. Es kann mit dem erfindungsgemäßen Verfahren ferner ein Polyolefinwachs hergestellt werden, das hochisotaktisch und hochkristallin ist und sich somit durch eine besondere Härte auszeichnet. Generell sind die Kettenenden aus gesättigten Kohlenwasserstoffgruppen aufgebaut. Mit dem erfindungsgemäßen Verfahren können farblos transparente Wachse hergestellt werden, die aus kompakten kugelförmigen Teilchen mit einer engen Korngrößenverteilung und einer hohen Schüttdichte bestehen. Das Wachspulver zeichnet sich durch eine sehr gute Rieselfähigkeit aus und läßt sich somit optimal handhaben. Das erfindungsgemäße Polyolefinwachs stellt somit eine neue Werkstoffklasse dar. Es hat eine Molmasse von 1000 bis 25000, vorzugsweise 2000 bis 10000, eine Molmassenverteilung $M_w/M_n$ von 1,8 bis 4,0 vorzugsweise 1,8 bis 3,0, eine Viskositätszahl von 2 bis 60 $cm^3/g$, einen Schmelzbereich von 120 bis 160, vorzugsweise 125 bis 155 °C, eine Schmelzenthalpie $\Delta H$ größer 80, vorzugsweise größer 100 J/g, einen Tropfpunktsbereich von 120 bis 160 °C und eine Schmelzviskosität von 100 bis 20000, vorzugsweise 100 bis 10000 mPa•s bei 170 °C.

Die nachfolgenden Beispiele sollen die Erfindung erläutern. Es bedeuten

VZ = Viskositätszahl in $cm^3/g$

$M_w$ = Molmassengewichtsmittel } ermittelt durch Gel-

$M_n$ = Molmassenzahlenmittel } permeationschromatographie

$M_w/M_n$ = Molmassenverteilung }

SD = Schüttdichte des Polymerpulvers in $g/dm^3$

II = Isotaktischer Index, bestimmt durch $^{13}C$-NMR-Spektroskopie

SV = Schmelzviskosität, ermittelt mittels Rotationsviskosimeter bei 170°C.

## Beispiel 1

Ein trockener 16-$dm^3$-Kessel wurde mit Stickstoff gespült und mit 80 $Ndm^3$ (entspr. 5 bar) Wasserstoff sowie mit 10 $dm^3$ flüssigem Propylen befüllt. Dann wurden 70 $cm^3$ toluolische Methylaluminoxanlösung (entsprechend 68 mmol Al, mittlerer Oligomerisierungsgrad des Methylaluminoxans n = 30) zugegeben und der Ansatz bei 30 °C 15 Minuten gerührt.

Parallel dazu wurden 9 mg (0,02 mmol) Bisindenyldimethylsilylzirkondichlorid in 35 $cm^3$ toluolischer Methylaluminoxanlösung (34 mmol Al) gelöst und durch 15-minütiges Stehenlassen voraktiviert. Die orangerote Lösung wurde dann in den Kessel gegeben. Das Polymerisationssystem wurde auf eine Temperatur von 70 °C gebracht und dann durch entsprechende Kühlung 30 Minuten bei dieser Temperatur gehalten.

Es wurden 2,88 kg Polypropylenwachs erhalten. Die Aktivität des Metallocens betrug somit 286,7 kg PP-Wachs/mmol Zr x h oder 640 kg PP-Wachs/g Metallocen x h.

VZ = 22,4 $cm^3/g$; $M_w$ = 6660, $M_n$ = 2870, $M_w/M_n$ = 2,3;

SD = 536 $g/dm^3$; II = 97,1 %;

keine ungesättigten Kettenenden (bestimmt nach $^{13}C$-NMR); Tropfpunkt = 143 °C; SV = 142 mPa•s. DSC-Messung (20 °C/min Aufheizung/Abkühlung): Schmp. 142 °C, Schmelzenthalpie $\Delta H$ = 101,4 J/g, Rekristallisationspunkt: 100 °C; Halbwertsbreiten Schmelzpeak = 8 °C, Rekristallisationspeak = 7 °C.

**Beispiel 2**

Es wurde analog zu Beispiel 1 verfahren, jedoch statt 80 $Ndm^3$ (entsp. 5 bar) Wasserstoff wurden 40 $Ndm^3$ (entsprechend 2,5 bar) Wasserstoff in den Kessel gegeben.

Es wurden 2,44 kg Polypropylenwachs erhalten. Die Aktivität des Metallocens betrug somit 242,9 kg PP-Wachs/mmol Zr x h oder 542 kg PP-Wachs/g Metallocen x h.
VZ = 24,3 $cm^3/g$; $M_w$ = 8300, $M_n$ = 3230, $M_w/M_n$ = 2,6;
SD = 470 $g/dm^3$; II = 97,4 %;
keine ungesättigten Kettenenden; Tropfpunkt = 144 °C; SV = 239 mPa•s; DSC-Messung (20 °C/min Aufheizung/Abkühlung): Schmp. 143 °C, Schemelzenthalphie $\Delta H$ = 104,2 J/g, Rekristallisationspunkt: 98 °C; Halbwertsbreiten Schmelzpeak = 8 °C, Rekristallisationspeak = 6 °C.

**Beispiel 3**

Es wurde analog zu Beispiel 1 verfahren, jedoch statt 80 $Ndm^3$ (entsp. 5 bar) Wasserstoff wurden 16 $Ndm^3$ (entsprechend 1 bar) Wasserstoff in den Kessel gegeben.

Es wurden 2,35 kg Polypropylenwachs erhalten. Die Aktivität des Metallocens betrug somit 2434 kg PP-Wachs/mmol Zr x h oder 522 kg PP-Wachs/g Metallocen x h.
VZ = 31,9 $cm^3/g$; $M_w$ = 10900, $M_n$ = 3700, $M_w/M_n$ = 2,9;
SD = 498 $g/dm^3$; II = 97,9 %;
keine ungesättigten Kettenenden; Tropfpunkt = 143 °C, SV = 760 mPa•s; DSC-Messung (20 °C/min Aufheizung/Abkühlung): Schmp. 142 °C, Schemelzenthalphie $\Delta H$ = 100,5 J/g, Rekristallisationspunkt: 100 °C; Halbwertsbreiten Schmelzpeak = 7 °C, Rekristallisationspeak = 7 °C.

**Beispiel 4**

Es wurde analog zu Beispiel 1 verfahren, jedoch statt 80 $Ndm^3$ (entsp. 5 bar) Wasserstoff wurden 8 $Ndm^3$ (entsprechend 0,25 bar) Wasserstoff in den Kessel gegeben.

Es wurden 2,10 kg Polypropylenwachs erhalten. Die Aktivität des Metallocens betrug somit 209,0 kg PP-Wachs/mmol Zr x h oder 467 kg PP-Wachs/g Metallocen x h.
VZ = 34,5 $cm^3/g$; $M_w$ = 13700, $M_n$ = 4540, $M_w/M_n$ = 3,0;
SD = 473 $g/dm^3$; II = 97,0 %;
keine ungesättigten Kettenenden; Tropfpunkt = 144 °C; SV = 1307 mPa•s; DSC-Messung (20 °C/min Aufheizung/Abkühlung): Schmp. 141 °C, Schemelzenthalphie $\Delta H$ = 106,7 J/g, Rekristallisationspunkt: 97,5 °C; Halbwertsbreiten Schmelzpeak = 6,5 °C, Rekristallisationspeak = 6 °C.

**Vergleichsversuch A**

Es wurde analog zu Beispiel 1 verfahren, jedoch statt 80 $Ndm^3$ (entsp. 5 bar) Wasserstoff wurde kein Wasserstoff in den Kessel gegeben.

Es wurden 1,62 kg Polypropylen erhalten. Die Aktivität des Metallocens betrug somit 161,2 kg PP/mmol Zr x h oder 360 kg PP/g Metallocen x h.
VZ = 49,1 $cm^3/g$; $M_w$ = 42000, $M_n$ = 16800, $M_w/M_n$ = 2,5;
SD = 492 $g/dm^3$; II = 97,0 %;
pro Polypropylenkette ein ungesättigtes Kettenende (bestimmt nach $^{13}C$-NMR).

**Beispiel 5**

Es wurde analog zu Beispiel 1 verfahren, jedoch statt 80 $Ndm^3$ (entsp. 5 bar) Wasserstoff wurden 40 $Ndm^3$ (entsprechend 2,5 bar) Wasserstoff in den Kessel gegeben.

Ferner wurden statt 9 mg (0,02 mmol) Bisindenyldimethylsilylzirkondichlorid 8,4 mg (0,02 mmol) Ethylenbisindenylzirkondichlorid verwendet.

Es wurden 2,59 kg Polypropylenwachs erhalten. Die Aktivität des Metallocens betrug somit 259,0 kg PP-Wachs/mmol Zr x h oder 617 kg PP-Wachs/g Metallocen x h.
VZ = 12,8 $cm^3/g$; $M_w$ = 6170, $M_n$ = 2810, $M_w/M_n$ = 2,2;
SD = 447 $g/dm^3$; II = 96,4 %;
keine ungesättigten Kettenenden; Tropfpunkt = 142 °C; SV = 133 mPa•s;
DSC-Messung (20 °C/min Aufheizung/Abkühlung): Schmp. 137 °C, Schemelzenthalphie $\Delta H$ = 105,8 J/g,

Rekristallisationspunkt: 97° C; Halbwertsbreiten Schmelzpeak = 8° C, Rekristallisationspeak = 6° C.

**Vergleichsversuch B**

Beispiel 5 wurde wiederholt, es wurde jedoch kein Wasserstoff verwendet.

Es wurden 1,98 kg Polypropylen erhalten. Die Aktivität des Metallocens betrug somit 198 kg PP/mmol Zr x h oder 471 kg PP/g Metallocen x h.
VZ = 35 $cm^3$/g; $M_w$ = 25500, $M_n$ = 11200, $M_w/M_n$ = 2,3;
SD = 485 g/$dm^3$; II = 97,1 %;
pro Polypropylenkette ein ungesättigtes Kettenende.

**Beispiel 6**

Ein trockener 16-$dm^3$-Kessel wurde mit Stickstoff gespült und mit 40 $Ndm^3$ (entsprechend 2,5 bar) Wasserstoff sowie mit 10 $dm^3$ flüssigem Propylen befüllt. Dann wurden 70 $cm^3$ toluolische Methylaluminoxanlösung (entsprechend 68 mmol Al, mittlerer Oligomerisierungsgrad n = 30) zugegeben und der Ansatz bei 30° C 15 Minuten gerührt.

Parallel dazu wurden 24 mg (0,047 mmol) Ethylenbisindenylhafniumdichlorid in 35 $cm^3$ toluolischer Methylaluminoxanlösung (34 mmol Al) gelöst und durch 15-minütiges Stehenlassen voraktiviert. Die gelbe Lösung wurde dann in den Kessel gegeben. Das Polymerisationssystem wurde auf eine Temperatur von 60° C gebracht und dann durch entsprechende Kühlung 5 h bei dieser Temperatur gehalten.

Es wurden 3,05 kg Polypropylenwachs erhalten. Die Aktivität des Metallocens betrug somit 12,9 kg PP-Wachs/mmol Hf x h oder 25,4 kg PP-Wachs/g Metallocen x h.
VZ = 13,4 $cm^3$/g; $M_w$ = 6340, $M_n$ = 2680, $M_w/M_n$ = 2,4;
SD = 425 g/$dm^3$; II = 98,1 %;
keine ungesättigten Kettenenden; Tropfpunkt = 139° C; SV = 193 mPa•s; DSC-Messung (20° C/min Aufheizung/Abkühlung): Schmp. 137° C, Schemelzenthalphie ΔH = 97,5 J/g, Rekristallisationspunkt: 97° C; Halbwertsbreiten Schmelzpeak = 9° C, Rekristallisationspeak = 7° C.

**Vergleichsversuch C**

Beispiel 6 wurde wiederholt, es wurde jedoch kein Wasserstoff verwendet.

Es wurden 2,03 kg Polypropylen erhalten. Die Aktivität des Metallocens betrug somit 8,5 kg PP/mmol Hf x h oder 16,9 kg PP/g Metallocen x h.
VZ = 95,0 $cm^3$/g; $M_w$ = 102100, $M_n$ = 50650, $M_w/M_n$ = 2,0;
SD = 410 g/$dm^3$; II = 97,7 %;
pro Polypropylenkette ein ungesättigtes Kettenende.

**Vergleichsversuch D**

Ein trockener 16-$dm^3$-Kessel wurde mit Stickstoff gespült und mit 10 $dm^3$ flüssigem Propylen befüllt. Dazu wurden 50 mmol Aluminiumtrimethyl in 50 $cm^3$ Toluol und 70 $cm^3$ toluolische Methylaluminoxanlösung (entsprechend 68 mmol Al, mittlerer Oligomerisierungsgrad n = 30) zugegeben und der Ansatz bei 30° C 15 Minuten gerührt.

Das weitere Vorgehen war wie in Beispiel 1. Es wurden 2,75 kg Polypropylen erhalten. Die Aktivität des Metallocens betrug somit 273,8 kg PP/mmol Zr x h oder 611 kg PP/g Metallocen x h. VZ = 34,9 $cm^3$/g; $M_w$ = 24350, $M_n$ = 8700, $M_w/M_n$ = 2,8.
Der Versuch zeigt, daß mit $AlMe_3$ die Molmasse zwar in gewisser Weise absenkbar ist, das Niveau der $H_2$-Versuche jedoch nicht erreicht wird. Gleichzeitig steigt jedoch der Restaschegehalt an.

**Vergleichsversuch E**

Vergleichsversuch D wurde wiederholt, statt 50 mmol Aluminiumtrimethyl wurden 50 mmol Al-triethyl verwendet und die Polymerisationsdauer wurde auf 2 h verlängert.

Polypropylen war nur in Spuren gebildet worden. Im überwiegenden Maße handelte es sich bei dem isolierten Feststoff um Zersetzungsprodukte des Aluminoxans, bzw. Al-triethyls.

**Vergleichsversuch F**

Vergleichsversuch D wurde wiederholt, statt 50 mmol $Al(CH_3)_3$ wurden 50 mmol $Zn(C_2H_5)_2$ verwendet und die Polymerisationsdauer auf 2 h verlängert.
Es wurden 0,21 kg Polypropylen erhalten. Die Aktivität des Metallocens betrug somit 5,2 kg PP/mmol Zr x h oder 11,7 kg PP/g Metallocen x h.
VZ = 27,9 $cm^3/g$; $M_w$ = 14900, $M_n$ = 5750, $M_w/M_n$ = 2,6.
Bedingt durch den hohen Restaschegehalt (ca. 4,8 Gew.-%) war die Herstellung einer klaren, farblosen Schmelze aus diesem Produkte nicht möglich, das Produkt war somit für eine Wachsanwendung ungeeignet.

## Patentansprüche

## Patentansprüche für folgende Vertragsstaaten : BE, DE, GB, IT, NL

1. 1-Olefinpolymerwachs mit gesättigten Kettenenden, bestehend aus Einheiten, welche sich von einem 1-Olefin der Formel $RCH=CH_2$, worin R einen Alkylrest mit 1 bis 28 C-Atomen bedeutet, ableiten, mit einer Molmasse $M_w$ von 1000 bis 25000, einer Molmassenverteilung $M_w/M_n$ von 1,8 bis 4,0, einer Viskositätszahl von 2 bis 60 $cm^3/g$ und einem Schmelzbereich von 120 bis 160 °C, einer Schmelzenthalpie $\Delta H$ größer 80 J/g, einem Tropfpunktsbereich von 120 bis 160 °C und einer Schmelzviskosität von 100 bis 20000 mPa•s bei 170 °C.

2. Verfahren zur Herstellung eines 1-Olefinpolymerwachses gemäß Anspruch 1 durch Polymerisation eines 1-Olefins der Formel $R-CH=CH_2$, Worin R eine Alkylgruppe mit 1 bis 28 C-Atomen ist, oder Copolymerisation dieser Olefine mit Ethylen bei einer Temperatur von -60 bis 200 °C, bei einem Druck von 0,5 bis 120 bar, in Lösung, in Suspension oder in der Gasphase, in Gegenwart eines Katalysators, welcher aus einem Metallocen als Übergangsmetallverbindung und einem Aluminoxan als Aktivator besteht, dadurch gekennzeichnet, daß die Polymerisation in Gegenwart eines Katalysators durchgeführt wird, dessen Übergangsmetallkomponente ein Metallocen der Formel (I)

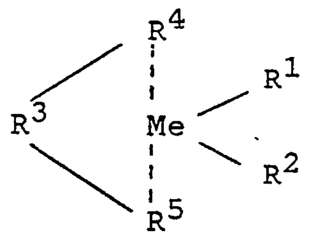

(I),

worin
Me ein Metall der Gruppe IV b oder V b des Periodensystems der Elemente ist,
$R^1$ und $R^2$ gleich oder verschieden sind und eine $C_1$-$C_{10}$-Alkylgruppe, $C_6$-$C_{10}$-Arylgruppe, eine $C_2$-$C_{10}$-, Alkenylgruppe, eine $C_7$-$C_{40}$-Aralkylgruppe, eine $C_8$-$C_{40}$-Arylalkenylgruppe oder ein Halogenatom bedeuten,
$R^3$ ein linearer $C_1$-$C_4$-, oder ein cyclischer $C_4$-$C_6$-Kohlenwasserstoffrest ist, wobei diese Reste mindestens ein Heteroatom als Brückeneinheit in der Kette enthalten können, oder $R^3$ kann auch aus einem oder bis zu vier Heteroatomen bestehen, deren weitere Valenzen durch Kohlenwasserstoffreste, Wasserstoff oder Halogenatome abgesättigt sind;
$R^4$ und $R^5$ gleich oder verschieden sind und einen ein- oder mehrkernigen Kohlenwasserstoffrest, welcher zusammen mit dem Zentralatom eine Sandwichstruktur bilden kann, bedeuten, und welche vor der Polymerisation mit einem Aluminoxan der Formel (II)

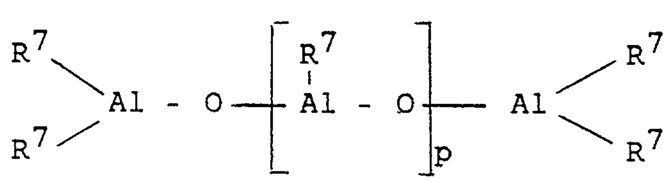

(II)

für den linearen Typ und/oder der Formel (III)

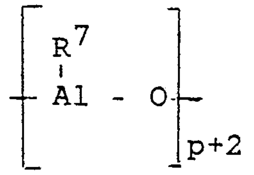 (III)

für den cyclischen Typ, wobei in den Formeln II und III $R^7$ eine $C_1$-$C_6$-Alkylgruppe bedeutet und p eine ganze Zahl von 5 bis 40 ist, bei einer Temperatur von -78 bis 100 °C 5 Minuten bis 60 Stunden voraktiviert wurde, und wobei der Aktivator ebenfalls ein Aluminoxan der Formeln II oder III ist und Wasserstoff im Molverhältnis 1-Olefin/$H_2$ von 3 bis 3000 zugegen ist.

**Patentanspruch für folgenden Vertragsstaat : ES**

1. Verfahren zur Herstellung eines 1-Olefinpolymerwachses mit gesättigten Kettenenden, bestehend aus Einheiten, welche sich von einem 1-Olefin der Formel $RCH=CH_2$, worin R einen Alkylrest mit 1 bis 28 C-Atomen bedeutet, ableiten, mit einer Molmasse $M_w$ von 1000 bis 25000, einer Molmassenverteilung $M_w/M_n$ von 1,8 bis 4,0, einer Viskositätszahl von 2 bis 60 $cm^3/g$ und einem Schmelzbereich von 120 bis 160 °C, einer Schmelzenthalpie $\Delta H$ größer 80 J/g, einem Tropfpunktbereich von 120 bis 160 °C und einer Schmelzviskosität von 100 bis 20000 mPa•s bei 170 °C, durch Polymerisation eines 1-Olefins der Formel $R$-$CH=CH_2$, worin R eine Alkylgruppe mit 1 bis 28 C-Atomen ist, oder Copolymerisation dieser Olefine mit Ethylen bei einer Temperatur von -60 bis 200 °C, bei einem Druck von 0,5 bis 120 bar, in Lösung, in Suspension oder in der Gasphase, in Gegenwart eines Katalysator, welcher aus einem Metallocen als Übergangsmetallverbindung und einem Aluminoxan als Aktivator besteht, dadurch gekennzeichnet, daß die Polymerisation in Gegenwart eines Katalysators durchgeführt wird, dessen Übergangsmetallkomponente ein Metallocen der Formel (I)

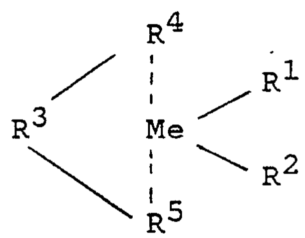 (I),

worin
Me ein Metall der Gruppe IV b oder V b des Periodensystems der Elemente ist,
$R^1$ und $R^2$ gleich oder verschieden sind und eine $C_1$-$C_{10}$-Alkylgruppe, $C_6$-$C_{10}$-Arylgruppe, eine $C_2$-$C_{10}$-Alkenylgruppe, eine $C_7$-$C_{40}$-Aralkylgruppe, eine $C_8$-$C_{40}$-Arylalkenylgruppe oder ein Halogenatom bedeuten, $R^3$ ein linearer $C_1$-$C_4$-, oder ein cyclischer $C_4$-$C_6$-Kohlenwasserstoffrest ist, wobei diese Reste mindestens ein Heteroatom als Brückeneinheit in der Kette enthalten können, oder $R^3$ kann auch aus einem oder bis zu vier Heteroatomen bestehen, deren weitere Valenzen durch Kohlenwasserstoffreste, Wasserstoff oder Halogenatome abgesättigt sind;
$R^4$ und $R^5$ gleich oder verschieden sind und einen ein- oder mehrkernigen Kohlenwasserstoffrest, welcher zusammen mit dem Zentralatom eine Sandwichstruktur bilden kann, bedeuten, und welche vor der Polymerisation mit einem Aluminoxan der Formel (II)

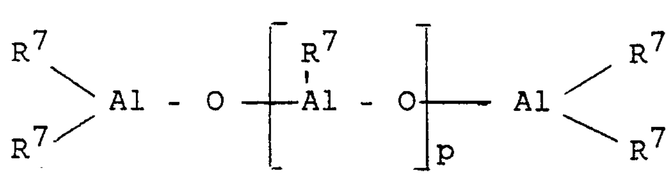 (II)

für den linearen Typ und/oder der Formel (III)

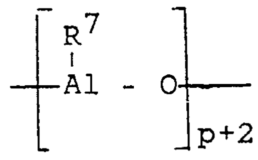

(III)

für den cyclischen Typ, wobei in den Formeln II und III $R^7$ eine $C_1$-$C_6$-Alkylgruppe bedeutet und p eine ganze Zahl von 5 bis 40 ist, bei einer Temperatur von -78 bis 100 °C 5 Minuten bis 60 Stunden voraktiviert wurde, und wobei der Aktivator ebenfalls ein Aluminoxan der Formeln II oder III ist und Wasserstoff im Molverhältnis 1-Olefin/$H_2$ von 3 bis 3000 zugegen ist.

## Claims

**Claims for the following Contracting States : BE, DE, GB, IT, NL**

**1.** A 1-olefin polymer wax, having saturated chain ends, comprising units derived from a 1-olefin of the formula $RCH=CH_2$ in which R denotes an alkyl radical having 1 to 28 carbon atoms, having a molecular weight $M_w$ of from 1,000 to 25,000, a molecular weight distribution $M_w/M_n$ of from 1.8 to 4.0, a viscosity number of from 2 to 60 $cm^3/g$ and a melting range of from 120 to 160 °C, a melt enthalpy ΔH of greater than 80 J/g, a drip point range of from 120 to 160 °C and a melt viscosity of from 100 to 20,000 mPa.s at 170 °C.

**2.** A process for the preparation of a 1-olefin polymer wax as claimed in claim 1, by polymerization of a 1-olefin of the formula $R$-$CH=CH_2$ in which R is an alkyl group having 1 to 28 carbon atoms, or copolymerization of this olefin with ethylene at a temperature of from -60 to 200 °C, at a pressure of 0.5 to 120 bar, in solution, in suspension or in the gas phase, in the presence of a catalyst comprising a metallocene as the transition metal compound and an aluminoxane as the activator, which comprises carrying out the polymerization in the presence of a catalyst whose transition metal component is a metallocene of the formula (I)

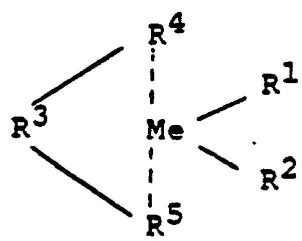

(I)

in which
Me is a metal from group IVb or Vb of the Periodic Table of the Elements,
$R^1$ and $R^2$ are identical or different and denote a $C_1$-$C_{10}$-alkyl group, a $C_6$-$C_{10}$-aryl group, a $C_2$-$C_{10}$-alkenyl group, a $C_7$-$C_{40}$-aralkyl group, a $C_8$-$C_{40}$-arylalkenyl group or a halogen atom,
$R^3$ is a linear $C_1$-$C_4$- or a cyclic $C_4$-$C_6$-hydrocarbon radical, it being possible for these radicals to contain at least one heteroatom as bridging unit in the chain, or $R^3$ may alternatively comprise one or up to four heteroatoms whose further valences are satisfied by hydrocarbon radicals, hydrogen or halogen atoms;
$R^4$ and $R^5$ are identical or different and denote a mononuclear or polynuclear hydrocarbon radical which is capable of forming a sandwich structure together with the central atom,
and has been pre-activated before the polymerization for 5 minutes to 60 hours at a temperature of from -78 to 100 °C using an aluminoxane of the formula (II)

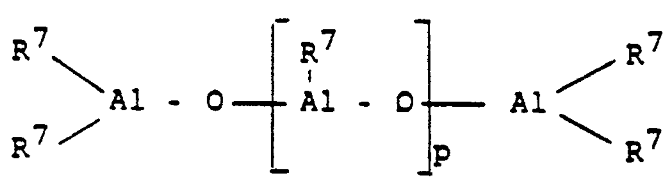

(II)

for the linear type and/or of the formula (III)

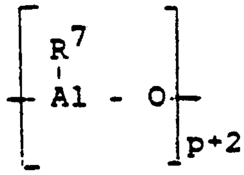

(III)

for the cyclic type, where, in the formulae II and III, $R^7$ denotes a $C_1$-$C_6$-alkyl group and p is an integer from 5 to 40, and where the activator is likewise an aluminoxane of the formula II or III, and hydrogen is present in the 1-olefin:$H_2$ molar ratio of from 3 to 3,000.

**Claim for the following Contracting State : ES**

1. A process for the preparation of a 1-olefin polymer wax, having saturated chain ends, comprising units derived from a 1-olefin of the formula $RCH=CH_2$ in which R denotes an alkyl radical having 1 to 28 carbon atoms, having a molecular weight $M_w$ of from 1,000 to 25,000, a molecular weight distribution $M_w/M_n$ of from 1.8 to 4.0, a viscosity number of from 2 to 60 $cm^3/g$ and a melting range of from 120 to 160 °C, a melt enthalpy $\Delta H$ of greater than 80 J/g, a drip point range of from 120 to 160 °C and a melt viscosity of from 100 to 20,000 mPa.s at 170 °C, by polymerization of a 1-olefin of the formula $R-CH=CH_2$ in which R is an alkyl group having 1 to 28 carbon atoms, or copolymerization of this olefin with ethylene at a temperature of from -60 to 200 °C, at a pressure of 0.5 to 120 bar, in solution, in suspension or in the gas phase, in the presence of a catalyst comprising a metallocene as the transition metal compound and an aluminoxane as the activator, which comprises carrying out the polymerization in the presence of a catalyst whose transition metal component is a metallocene of the formula (I)

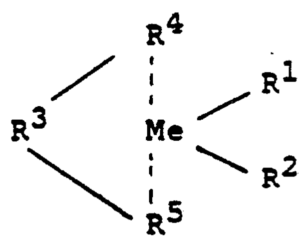

(I)

in which
Me is a metal from group IVb or Vb of the Periodic Table of the Elements,
$R^1$ and $R^2$ are identical or different and denote a $C_1$-$C_{10}$-alkyl group, a $C_6$-$C_{10}$-aryl group, a $C_2$-$C_{10}$-alkenyl group, a $C_7$-$C_{40}$-aralkyl group, a $C_8$-$C_{40}$-arylalkenyl group or a halogen atom,
$R^3$ is a linear $C_1$-$C_4$- or a cyclic $C_4$-$C_6$-hydrocarbon radical, it being possible for these radicals to contain at least one heteroatom as bridging unit in the chain, or $R^3$ may alternatively comprise one or up to four heteroatoms whose further valences are satisfied by hydrocarbon radicals, hydrogen or halogen atoms;
$R^4$ and $R^5$ are identical or different and denote a mononuclear or polynuclear hydrocarbon radical which is capable of forming a sandwich structure together with the central atom,
and has been pre-activated before the polymerization for 5 minutes to 60 hours at a temperature of from -78 to 100 °C using an aluminoxane of the formula (II)

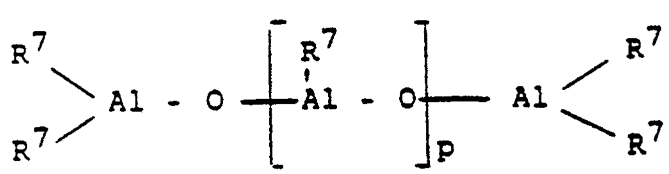

(II)

for the linear type and/or of the formula (III)

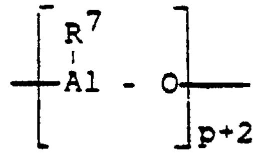

(III)

for the cyclic type, where, in the formulae II and III, $R^7$ denotes a $C_1$-$C_6$-alkyl group and p is an integer from 5 to 40, and where the activator is likewise an aluminoxane of the formula II or III, and hydrogen is present in the 1-olefin:$H_2$ molar ratio of from 3 to 3,000.

**Revendications**
**Revendications pour les Etats contractants suivants : BE, DE, GB, IT, NL**

**1.** Cire d'un polymère de 1-oléfine à extrémités de chaînes saturées, formé de motifs d'une 1-oléfine de formule $RCH=CH_2$ où R représente un alkyle ayant de 1 à 28 atomes de carbone, qui a une masse moléculaire $M_m$ de 1000 à 25000, une répartition de masses moléculaires ($M_m/M_n$) comprise entre 1,8 et 4,0, un indice de viscosité de 2 à 60 $cm^3/g$ et un intervalle de fusion de 120 à 160 °C, une enthalpie de fusion $\Delta H$ supérieure à 80 J/g, un intervalle de de point de goutte compris entre 120 et 160 °C et une viscosité à l'état fondu de 100 à 20000 mPa.s à la température de 170 °C.

**2.** Procédé de préparation d'une cire d'un polymère de 1-oléfine selon la revendication 1 par polymérisation d'une 1-oléfine de formule $R\text{-}CH=CH_2$, R représentant un alkyle pouvant avoir de 1 à 28 atomes de carbone, ou par copolymérisation de cette oléfine avec de l'éthylène, à une température de -60 à 200 °C et sous une pression de 0,5 à 120 bar, en solution, en suspension ou en phase gazeuse, en présence d'un catalyseur constitué d'un métallocène comme composé de métal de transition et d'un aluminoxane comme activant, procédé caractérisé en ce que l'on effectue la polymérisation en présence d'un catalyseur dont le composant du métal de transition est un métallocène de formule I ci-dessous

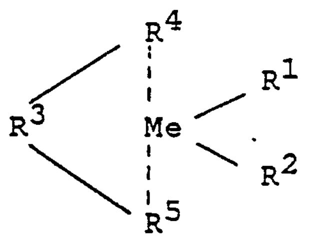

(I),

(dans laquelle
Me représente un métal du groupe IV b ou V b de la classification périodique des éléments,
$R^1$ et $R^2$, qui peuvent être identiques ou différents l'un de l'autre, désignent chacun un alkyle en $C_1$-$C_{10}$, un aryle en $C_6$-$C_{10}$, un alcényle en $C_2$-$C_{10}$, un aralkyle en $C_7$-$C_{40}$, un arylalcényle en $C_8$-$C_{40}$ ou un atome d'halogène,
$R^3$ désigne un radical hydrocarboné linéaire en $C_1$-$C_4$ ou un radical hydrocarboné cyclique en $C_4$-$C_6$, radicaux dont la chaîne peut comporter un ou plusieurs hétéroatomes formant pont, ou bien $R^3$ peut être aussi formé d'un à quatre hétéroatomes, dont des valences supplémentaires peuvent être saturées par des radicaux hydrocarbonés ou par des atomes d'hydrogène ou d'halogènes ; et
$R^4$ et $R^5$, identiques ou différents l'un de l'autre, représentent chacun un radical hydrocarboné monocyclique ou polycyclique pouvant former avec l'atome central une structure en sandwich), métallocène qui, avant la polymérisation, a été préalablement activé avec un aluminoxane de formule II

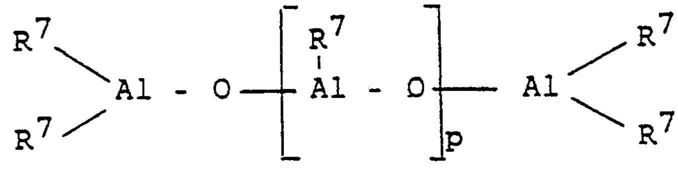

(II)

pour la structure linéaire et/ou de formule III

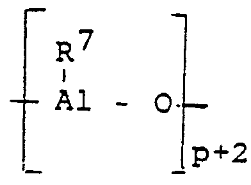

(III)

pour la structure cyclique (dans les formules II et III $R^7$ désignant un alkyle en $C_1$-$C_6$ et p un entier de 5 à 40) à une température de -78 à 100 °C pendant une durée de 5 minutes à 60 heures, l'activant étant également un aluminoxane de formule II ou III et de l'hydrogène étant présent dans un rapport molaire 1-oléfine/$H_2$ compris entre 3 et 3000.

**Revendication pour l'Etat contractant suivant : ES**

**1.** Procédé de préparation d'une cire d'un polymère de 1-oléfine à extrémités de chaînes saturées, formé de motifs d'une 1-oléfine de formule $RCH=CH_2$ où R représente un alkyle ayant de 1 à 28 atomes de carbone, qui a une masse moléculaire $M_m$ de 1000 à 25000, une répartition de masses moléculaires ($M_m/M_n$) comprise entre 1,8 et 4,0, un indice de viscosité de 2 à 60 $cm^3/g$ et un intervalle de fusion de 120 à 160 °C, une enthalpie de fusion $\Delta H$ supérieure à 80 J/g, un intervalle de point de goutte compris entre 120 et 160 °C et une viscosité à l'état fondu de 100 à 20000 mPa.s à la température de 170 °C, par polymérisation d'une 1-oléfine de formule $R\text{-}CH=CH_2$, R représentant un alkyle pouvant avoir de 1 à 28 atomes de carbone, ou par copolymérisation de cette oléfine avec de l'éthylène, à une température de -60 à 200 °C et sous une pression de 0,5 à 120 bar, en solution, en suspension ou en phase gazeuse, en présence d'un catalyseur constitué d'un métallocène comme composé de métal de transition et d'un aluminoxane comme activant, procédé caractérisé en ce que l'on effectue la polymérisation en présence d'un catalyseur dont le composant du métal de transition est un métallocène de formule I ci-dessous

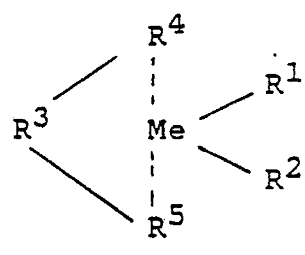

(I),

(dans laquelle
Me représente un métal du groupe IV b ou V b de la classification périodique des éléments,
$R^1$ et $R^2$, qui peuvent être identiques ou différents l'un de l'autre, désignent chacun un alkyle en $C_1$-$C_{10}$, un aryle en $C_6$-$C_{10}$, un alcényle en $C_2$-$C_{10}$, un aralkyle en $C_7$-$C_{40}$, un arylalcényle en $C_8$-$C_{40}$ ou un atome d'halogène,
$R^3$ désigne un radical hydrocarboné linéaire en $C_1$-$C_4$ ou un radical hydrocarboné cyclique en $C_4$-$C_6$, radicaux dont la chaîne peut comporter un ou plusieurs hétéroatomes formant pont, ou bien $R^3$ peut être aussi formé d'un à quatre hétéroatomes, dont des valences supplémentaires peuvent être saturées par des radicaux hydrocarbonés ou par des atomes d'hydrogène ou d'halogènes ; et

$R^4$ et $R^5$, identiques ou différents l'un de l'autre, représentent chacun un radical hydrocarboné monocyclique ou polycyclique pouvant former avec l'atome central une structure en sandwich), métallocène qui, avant la polymérisation, a été préalablement activé avec un aluminoxane de formule II

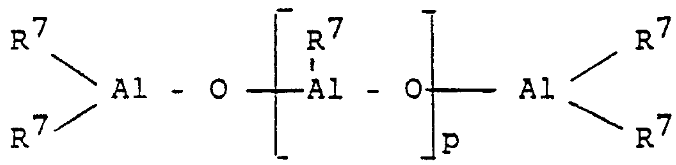

(II)

pour la structure linéaire et/ou de formule III

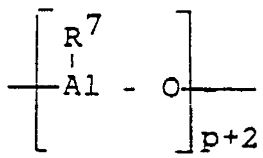

(III)

pour la structure cyclique (dans les formules II et III $R^7$ désignant un alkyle en $C_1$-$C_6$ et p un entier de 5 à 40) à une température de -78 à 100 °C pendant une durée de 5 minutes à 60 heures, l'activant étant également un aluminoxane de formule II ou III et de l'hydrogène étant présent dans un rapport molaire 1-oléfine/$H_2$ compris entre 3 et 3000.